# EUROPEAN PATENT APPLICATION

(11) **EP 4 092 787 A1**
(43) Date of publication of application: **23.11.2022**
(21) Application number: 20913469.1
(22) Date of filing: 27.02.2020
(51) Int. Cl.: H01M 4/525, H01M 4/505

(54) **COBALT-FREE LAYERED POSITIVE ELECTRODE MATERIAL AND METHOD FOR PREPARING SAME, AND LITHIUM-ION BATTERY**

(30) Priority: 17.01.2020 CN 202010054733
(71) Applicant: SVOLT ENERGY TECHNOLOGY CO., LTD, Changzhou, Jiangsu 213200 (CN)
(72) Inventor: QIAO, Qiqi, hangzhou, Jiangsu 213200 (CN); JIANG, Weijun, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN)
(74) Representative: DREISS Patentanwälte PartG mbB
(86) International application number: PCT/CN2020/076991
(87) International publication number: WO 2021/142891

(57) **Abstract**

A cobalt-free layered positive electrode material, a preparation method thereof, and a lithium-ion battery are provided. The method includes: preparing a layered lithium nickel manganese oxide matrix material; mixing the layered lithium nickel manganese oxide matrix material with a coating agent to obtain a first mixed material; and forming a coating layer on a surface of the layered lithium nickel manganese oxide matrix material by performing a first sintering treatment on the first mixed material to obtain the cobalt-free layered positive electrode material. The coating agent includes a first coating agent including ceramic oxide, and a second coating agent including at least one of phosphate and silicate.

## Description

### CROSS-REFERENCES TO RELATED APPLICATIONS

This application claims priority to and the benefit of Chinese Patent Application No. 202010054733.9, filed with China National Intellectual Property Administration on January 17, 2020, the entire disclosure of which is incorporated herein by reference.

### FIELD

The present disclosure relates to the field of lithium-ion batteries, in particular, to a cobalt-free layered positive electrode material and a preparation method thereof, and a lithium-ion battery.

### BACKGROUND

The cobalt-free layered positive electrode material does not contain a cobalt element, and has advantages of low cost and stable structure, which may reduce cost of a lithium-ion battery, prolong service life of the lithium-ion battery, and improve safety of the lithium-ion battery.

However, the current cobalt-free layered positive electrode material and a preparation method thereof, and the lithium-ion battery still needs to be improved.

### SUMMARY

The present disclosure is made based on the following findings of the inventors.

At present, a cobalt-free layered positive electrode material has poor rate capability, which may affect use performance of a lithium-ion battery. The inventors have found that this is mainly caused by the absence of a cobalt element in the cobalt-free layered positive electrode material. Specifically, the cobalt-free layered positive electrode material does not contain the cobalt element, resulting in poor conductivity of the cobalt-free layered positive electrode material, which in turn affects its rate capability.

The present disclosure aims to solve one of the technical problems in the related art at least to a certain extent.

To this end, in one aspect of the present disclosure, the present disclosure proposes a method for preparing a cobalt-free layered positive electrode material. The method includes: preparing a layered lithium nickel manganese oxide matrix material; mixing the layered lithium nickel manganese oxide matrix material with a coating agent to obtain a first mixed material; and forming, by performing a first sintering treatment on the first mixed material, a coating layer on a surface of the layered lithium nickel manganese oxide matrix material to obtain the cobalt-free layered positive electrode material, the coating agent including a first coating agent including ceramic oxide, and a second coating agent including at least one of phosphate and silicate. Therefore, with this method, it is possible to effectively improve conductivity of the cobalt-free layered positive electrode material, therefore improving its rate capability. Thus, the cobalt-free layered positive electrode material has the advantages of low cost, stable structure and excellent rate capability. A lithium-ion battery with the cobalt layered positive electrode material has good use performance and low cost.

According to embodiments of the present disclosure, the ceramic oxide includes at least one of zirconium oxide, titanium oxide, aluminum oxide, or boron oxide. Therefore, electronic conductivity of the cobalt-free layered positive electrode material can be improved by the above ceramic oxide to improve the rate capability of the cobalt-free layered positive electrode material.

According to an embodiment of the present disclosure, the second coating agent includes at least one of lithium phosphate and lithium silicate. Therefore, ionic conductivity of the cobalt-free layered positive electrode material can be improved by the above coating agent to improve the rate capability of the cobalt-free layered positive electrode material.

According to the embodiment of the present disclosure, a mass ratio% of the ceramic oxide to the layered lithium nickel manganese oxide matrix material ranges from 0.15% to 0.35%, and a mass ratio% the second coating agent to the layered lithium nickel manganese oxide matrix material ranges from 0.4% to 1.0%. As a result, the rate capability of the cobalt-free layered positive electrode material can be significantly improved. Meanwhile, the cobalt-free layered positive electrode material can obtain good cycle performance.

According to the embodiment of the present disclosure, a molar ratio of the first coating agent to the second coating agent ranges from 0.2 to 0.6. As a result, the rate capability of the cobalt-free layered positive electrode material can be significantly improved. In addition, it is possible to prevent impurity phases from being generated. Thus, it is ensured that the cobalt-free layered positive electrode material can have higher capacity.

According to the embodiments of the present disclosure, the first coating agent and the second coating agent have each independently a particle size ranging from 50 nm to 300 nm. As a result, the coating layer formed subsequently can obtain higher uniformity and compactness, thereby further improving the cycle performance of the cobalt-free layered positive electrode material.

According to the embodiments of the present disclosure, the first coating agent and the second coating agent have each independently a particle size ranging from 50 nm to 100 nm. Therefore, the uniformity and compactness of the coating layer can be further improved, thereby further improving the cycle performance of the cobalt-free layered positive electrode material.

According to the embodiments of the present disclosure, the preparing the layered lithium nickel manganese oxide matrix material includes: mixing a lithium source powder with nickel-manganese hydroxide to obtain a second mixed material; and performing a second sintering treatment on the second mixed material to obtain the layered lithium nickel manganese oxide matrix material. Therefore, a matrix material may be provided for the cobalt-free layered positive electrode material, and cost of the cobalt-free layered positive electrode material can be reduced.

According to the embodiment of the present disclosure, the lithium source powder is mixed with the nickel-manganese hydroxide at a rotation speed ranging from 800 rpm to 900 rpm for a mixing duration ranging from 10 min to 20 min. Therefore, the lithium source powder can be uniformly mixed with the nickel-manganese hydroxide. Thus, the layered lithium nickel manganese oxide matrix material can be obtained through the subsequent second sintering treatment.

According to an embodiment of the present disclosure, the second sintering treatment is performed in an atmosphere with a volume concentration of oxygen greater than 90%; a temperature of the second sintering treatment ranges from 800°C to 970°C; a duration of the second sintering treatment ranges from 8h to 12h; and a heating rate of the second sintering treatment ranges from 1°C/min to 5°C/min. Therefore, the layered lithium nickel manganese oxide matrix material can be obtained.

According to the embodiment of the present disclosure, the layered lithium nickel manganese oxide matrix material is mixed with the coating agent at a rotation speed ranging from 800 rpm to 900 rpm for a mixing duration ranging from 10 min to 20 min. Therefore, the layered lithium nickel manganese oxide matrix material and the coating agent can be mixed evenly with each other, so that the coating agent can be evenly attached to the surface of the layered lithium nickel manganese oxide matrix material, which is convenient for a coating layer to be formed on the surface of the lithium nickel manganese oxide matrix material through the subsequent first sintering treatment to obtain the cobalt-free layered positive electrode material.

According to an embodiment of the present disclosure, the first sintering treatment is performed in an atmosphere with a volume concentration of oxygen of 20% to 100%; a temperature of the first sintering treatment ranges from 300°C to 700°C; a duration of the first sintering treatment ranges from 4h to 10h; and a heating rate of the first sintering treatment ranges from 3°C/min to 5°C/min. Therefore, the coating agent adhering to the surface of the layered lithium nickel manganese oxide matrix material can be formed as the coating layer to obtain the cobalt-free layered positive electrode material.

In another aspect of the present disclosure, the present disclosure proposes a cobalt-free layered positive electrode material. According to embodiments of the present disclosure, the cobalt-free layered positive electrode material includes a layered lithium nickel manganese oxide matrix material, and a coating layer located on a surface of the layered lithium nickel manganese oxide matrix material. The coating layer includes a first coating agent including ceramic oxide, and a second coating agent including at least one of phosphate and silicate. Therefore, the cobalt-free layered positive electrode material has the advantages of low cost, stable structure, and excellent rate capability. Thus, a lithium-ion battery using the cobalt-free layered positive electrode material has good use performance and low cost.

According to an embodiment of the present disclosure, the ceramic oxide includes at least one of zirconium oxide, titanium oxide, aluminum oxide, or boron oxide. Therefore, electronic conductivity of the cobalt-free layered positive electrode material can be improved by the above ceramic oxide to improve rate capability of the cobalt-free layered positive electrode material.

According to an embodiment of the present disclosure, the second coating agent includes at least one of lithium phosphate and lithium silicate. Therefore, ionic conductivity of the cobalt-free layered positive electrode material can be improved by the above coating agent to improve the rate capability of the cobalt-free layered positive electrode material.

According to the embodiments of the present disclosure, a mass ratio% of the ceramic oxide to the layered lithium nickel manganese oxide matrix material ranges from 0.15% to 0.35%, and a mass ratio% of the second coating agent to the layered lithium nickel manganese oxide matrix material ranges from 0.4% to 1.0%. Therefore, the rate capability of the cobalt-free layered positive electrode material can be significantly improved. Meanwhile, the cobalt-free layered positive electrode material can obtain good cycle performance.

According to the embodiment of the present disclosure, a molar ratio of the first coating agent to the second coating agent ranges from 0.2 to 0.6. Therefore, the rate capability of the cobalt-free layered positive electrode material can be significantly improved. In addition, it is possible to avoid impurity phases from being generated, and it is ensured that the cobalt-free layered positive electrode material has higher capacity.

In another aspect of the present disclosure, the present disclosure proposes a lithium-ion battery. According to embodiments of the present disclosure, the lithium-ion battery includes a positive electrode sheet including the cobalt-free layered positive electrode material as described above. Therefore, the lithium-ion battery has all the features and advantages of the cobalt-free layered positive electrode material as described above, and the detailed description thereof will be omitted herein. In general, the lithium-ion battery has low cost, excellent rate capability, long service life, and high safety.

### BRIEF DESCRIPTION OF DRAWINGS

FIG. 1 illustrates a schematic flowchart of a method for preparing a cobalt-free layered positive electrode material according to an embodiment of the present disclosure;
FIG. 2 illustrates a scanning electron microscope photograph of a cobalt-free layered positive electrode material in Example 1; and
FIG. 3 illustrates a scanning electron microscope photograph of a cobalt-free layered positive electrode material in Comparative Example 1.

### DESCRIPTION OF EMBODIMENTS

Embodiments of the present disclosure are described in detail below, examples of which are illustrated in the accompanying drawings. The embodiments described below with reference to the accompanying drawings are exemplary and are only used to explain the present disclosure, and should not be construed as a limitation on the present disclosure.

In one aspect of the present disclosure, the present disclosure proposes a method for preparing a cobalt-free layered positive electrode material. For ease of understanding, the method according to embodiments of the present disclosure is briefly described below.

According to the embodiments of the present disclosure, by mixing a layered lithium nickel manganese oxide matrix material with a coating agent, the coating agent can be adhered to a surface of the layered lithium nickel manganese oxide matrix material. A coating layer is formed on the surface of the layered lithium nickel manganese oxide matrix material through a first sintering treatment. The employed coating agent is a mixture of a first coating agent and a second coating agent. The first coating agent includes ceramic oxide, and the second coating agent includes at least one of phosphate and silicate. Further, the ceramic oxide can improve electrical conductivity of the cobalt-free layered positive electrode material, and the phosphate and the silicate can improve ionic conductivity of the cobalt-free layered positive electrode material. That is, the resulted coating layer can improve the conductivity of the cobalt-free layered positive electrode material, which in turn can improve rate capability of the cobalt-free layered positive electrode material. Therefore, the cobalt-free layered positive electrode material has advantageous such as low cost, stable structure and excellent rate capability.

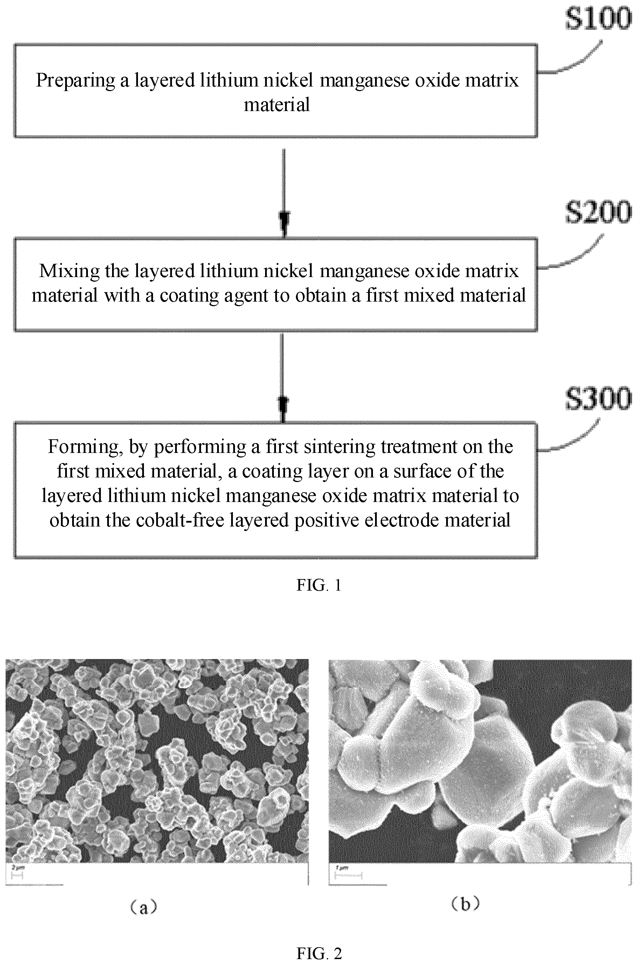

According to an embodiment of the present disclosure, with reference to FIG. 1, the method includes:
At S100, a layered lithium nickel manganese oxide matrix material is prepared.

According to the embodiments of the present disclosure, at S100, a layered lithium nickel manganese oxide matrix material is prepared. According to the embodiments of the present disclosure, the preparing the layered lithium nickel manganese oxide matrix material may include: first, mixing lithium source powder with nickel-manganese hydroxide to obtain a second mixed material, and then performing a second sintering treatment on the second mixed material, to obtain the layered lithium nickel manganese oxide matrix material. Therefore, a matrix material may be provided for the cobalt-free layered positive electrode material, and cost of the cobalt-free layered positive electrode material can be reduced.

According to the embodiment of the present disclosure, the mixing of the lithium source powder and the nickel-manganese hydroxide may be performed in a high-speed mixing device at a material filling efficiency ranging from 50% to 70%. According to the embodiments of the present disclosure, the lithium source powder is mixed with the nickel-manganese hydroxide at a rotation speed ranging from 800 rpm to 900 rpm, such as 800 rpm, 850 rpm, 900 rpm, for a mixing duration ranging from 10 min to 20 min, such as 10 min, 12 min, 15 min, 18 min, 20 min. Therefore, the lithium source powder and the nickel-manganese hydroxide can be uniformly mixed with each other, which facilitates obtaining the layered lithium nickel manganese oxide matrix material through the second sintering treatment.

According to the embodiments of the present disclosure, the second sintering treatment is performed in an atmosphere with a volume concentration of oxygen greater than 90%; a temperature of the second sintering treatment ranges from 800°C to 970°C, such as 800°C, 830°C, 850°C, 880°C, 900°C, 930°C, 950°C, 970°C; a duration of the second sintering treatment ranges from 8h to 12h, such as 8h, 9 h, 10 h, 11 h, 12 h; and a heating rate of the second sintering treatment ranges from 1°C/min to 5°C/min, such as 1°C/min, 2°C/min, 3°C/min, 4°C/min, 5°C/min. Therefore, the layered lithium nickel manganese oxide matrix material can be obtained.

According to the embodiments of the present disclosure, after treated through the second sintering treatment, the second mixed material needs to be cooled, pulverized and sieved sequentially to obtain the layered lithium nickel manganese oxide matrix material. Further, the cooling may be natural cooling in air, the pulverizing may be mechanical pulverizing, roller crushing or air jet pulverizing, and the mesh number of the sieving may range from 300 meshes to 400 meshes.

The specific material of the lithium source powder is not particularly limited, and may be designed for those skilled in the art based on the commonly used lithium source powder for the cobalt-free layered positive electrode material. For example, according to the embodiments of the present disclosure, the lithium source powder may include at least one of lithium hydroxide and lithium carbonate.

According to the embodiments of the present disclosure, a molecular formula of nickel-manganese hydroxide may be NixMny(OH)₂, where 0.55≤x≤0.95, and 0.05≤y≤0.45. Therefore, a precursor may be provided for the layered lithium nickel manganese oxide matrix material, so that the layered lithium nickel manganese oxide matrix material has a higher nickel content, thereby improving capacity of the resulted cobalt-free layered positive electrode material.

At S200, the layered lithium nickel manganese oxide matrix material is mixed with a coating agent to obtain a first mixed material.

According to the embodiments of the present disclosure, in this step, the layered lithium nickel manganese oxide matrix material is mixed with the coating agent to obtain the first mixed material. According to the embodiments of the present disclosure, the coating agent includes a first coating agent, and a second coating agent. Further, the first coating agent includes ceramic oxide, and the second coating agent includes at least one of phosphate and silicate. Therefore, the electronic conductivity of the resulted cobalt-free layered positive electrode material can be improved by the ceramic oxide, and the ionic conductivity of the resulted cobalt-free layered positive electrode material can be improved by the phosphate and the silicate, thereby increasing the rate capability of the cobalt-free layered positive electrode material.

According to the embodiments of the present disclosure, the mixing of the layered lithium nickel manganese oxide matrix material and the coating agent may be performed in a high-speed mixing device at a material filling efficiency ranging from 30% to 70%. According to the embodiments of the present disclosure, the layered lithium nickel manganese oxide matrix material is mixed with the coating agent at a rotation speed ranging from 800 rpm to 900 rpm, such as 800 rpm, 850 rpm, 900 rpm, for a mixing duration ranging from 10 min to 20 min, such as 10 min, 12 min, 15 min, 18 min, 20 min. Therefore, the layered lithium nickel manganese oxide matrix material can be uniformly mixed with the coating agent, so that the coating agent can be uniformly adhered to a surface of the layered lithium nickel manganese oxide matrix material, which facilitates forming a coating layer on the surface of the lithium nickel manganese oxide matrix material through the subsequent first sintering treatment, to obtain the cobalt-free layered positive electrode material.

According to the embodiments of the present disclosure, the ceramic oxide may include zirconium oxide, titanium oxide, aluminum oxide, or boron oxide. Therefore, the electronic conductivity of the cobalt-free layered positive electrode material can be improved by using the above ceramic oxide to improve the rate capability of the cobalt-free layered positive electrode material.

According to the embodiments of the present disclosure, the second coating agent may include at least one of lithium phosphate and lithium silicate (Li₄SiO₄). Therefore, the ionic conductivity of the cobalt-free layered positive electrode material can be improved by using the above coating agent to improve the rate capability of the cobalt-free layered positive electrode material.

According to the embodiments of the present disclosure, a mass ratio% of the ceramic oxide to the layered nickel manganese oxide matrix material may range from 0.15% to 0.35%, such as 0.15%, 0.16%, 0.18%, 0.20%, 0.22%, 0.24%, 0.26%, 0.28%, 0.30%, 0.32%, 0.35%, and a mass ratio% of the second coating agent to the layered nickel manganese oxide matrix material may range from 0.4% to 1.0%, such as 0.4%, 0.5%, 0.6%, 0.7%, 0.8%, 0.9%, 1.0%. The inventors found that by setting a content of the ceramic oxide and a content of the second coating agent within the above ranges, respectively, it is possible to significantly improve the rate capability of the cobalt-free layered positive electrode material. In addition, it is also possible to avoid coating layer from being too thick due to excessive amount of the coating agent to reduce a migration speed of a lithium ion and to avoid the layered nickel lithium manganese oxide matrix material from not being completely coated due to too small amount of the coating agent to reduce cycle performance. That is, by setting the content of the ceramic oxide and the content of the second coating agent within the above ranges, respectively, it is beneficial to significantly improve the rate capability of the cobalt-free layered positive electrode material. Meanwhile, the cobalt-free layered positive electrode material can obtain good cycle performance.

According to the embodiment of the present disclosure, a molar ratio of the first coating agent to the second coating agent may range from 0.2 to 0.6, such as 0.2, 0.3, 0.4, 0.5, 0.6. As a result, the rate capability of the cobalt-free layered positive electrode material can be significantly improved. In addition, it is possible to prevent impurity phases from being generated. Thus, it is ensured that the cobalt-free layered positive electrode material can have higher capacity. For example, the coating agent is a mixture of zirconium oxide and lithium phosphate. When a molar ratio of the zirconium oxide to the lithium phosphate is too large (such as greater than 0.6) or too small (such as smaller than 0.2), a certain impurity phase Zr₃(PO₄)₄ would be generated, which may reduce the capacity of the cobalt-free layered positive electrode material. According to some embodiments of the present disclosure, when the coating agent includes both the first coating agent and the second coating agent, the molar ratio of the first coating agent to the second coating agent may be 0.5.

According to the embodiments of the present disclosure, the first coating agent and the second coating agent may have each independently a particle size ranging from 50 nm to 300 nm, such as 50 nm, 80 nm, 100 nm, 150 nm, 180 nm, 200 nm, 250 nm, 280 nm, and 300 nm. A coating layer may be formed by treating the coating agent through the subsequent first sintering treatment. The inventors found that when the particle size of each of the first coating agent and the second coating agent is larger (for example, greater than 300 nm), uniformity and compactness of the coating layer will be reduced, which in turn affects coating effect of the coating layer and the cycle performance of the cobalt-free layered positive electrode material. When the particle size of each of the first coating agent and the second coating agent is smaller (for example, smaller than 50 nm), particles are easily agglomerated, which would also reduce the uniformity and the compactness of the coating layer, and affect the cycle performance of the cobalt-free layered positive electrode material. In the present disclosure, by setting the particle size of each of the first coating agent and the second coating agent within the above ranges, the coating layer formed subsequently can obtain higher uniformity and compactness, which further improves the cycle performance of the cobalt-free layered positive electrode material.

According to some embodiments of the present disclosure, the first coating agent and the second coating agent may have each independently a particle size ranging from 50 nm to 100 nm. Therefore, the uniformity and the compactness of the coating layer can be further improved, which can further improve the cycle performance of the cobalt-free layered positive electrode material.

At S300, a first sintering treatment is performed on the first mixed material, and a coating layer is formed on the surface of the layered lithium nickel manganese oxide matrix material, to obtain the cobalt-free layered positive electrode material.

According to the embodiment of the present disclosure, in this step, the first sintering treatment is performed on the first mixed material, and the coating layer is formed on the surface of the layered lithium nickel manganese oxide matrix material, to obtain the cobalt-free layered positive electrode material. According to the embodiments of the present disclosure, the first sintering treatment may be performed in an atmosphere with a volume concentration of oxygen ranging from 20% to 100%; a temperature of the first sintering treatment ranges from 300°C to 700°C, such as 300°C, 400°C, 500°C, 600°C, 700°C; a duration of the first sintering treatment ranges from 4h to 10h, such as 4h, 5h, 6h, 7h, 8h, 9h, 10h; and a heating rate of the first sintering treatment ranges from 3°C/min to 5°C/min, such as 3°C/min, 4°C/min, 5°C/min. Therefore, the coating agent adhering to the surface of the layered lithium nickel manganese oxide matrix material can be formed as the coating layer to obtain the cobalt-free layered positive electrode material.

According to the embodiment of the present disclosure, after treated through the first sintering treatment, the first mixed material is sieved with a mesh number ranging from 300 meshes to 400 meshes to obtain the cobalt-free layered positive electrode material.

According to the embodiments of the present disclosure, the cobalt-free layered positive electrode material may be a monocrystalline positive electrode material, or a polycrystalline positive electrode material, so that the above cobalt-free layered positive electrode material can obtain excellent rate capability, low cost and stable structure.

According to the embodiments of the present disclosure, the cobalt-free layered positive electrode material obtained by the above method has a specific surface area ranging from 0.1 m²/g to 0.7 m²/g. Therefore, the cobalt-free layered positive electrode material has a suitable specific surface area, which can effectively alleviate gas generation phenomenon due to an excessively large specific surface area, and effectively alleviate the rate capability decreasing due to an excessively small specific surface area.

According to the embodiments of the present disclosure, the cobalt-free layered positive electrode material obtained by the above method has a median particle diameter (D50) ranging from 3 µm to 15 µm. Therefore, it is beneficial for the cobalt-free layered positive electrode material to obtain higher rate capability. In addition, when the cobalt-free layered positive electrode material is applied to a lithium-ion battery, occurrence of the gas generation can also be effectively alleviated.

According to the embodiments of the present disclosure, the cobalt-free layered positive electrode material obtained by the above method has a pH smaller than or equal to 12. Therefore, it is possible to effectively alleviate uneven coating caused by the excessive alkalinity of the cobalt-free layered positive electrode material, so that a slurry containing the cobalt-free layered positive electrode material can be uniformly coated on a current collector.

In summary, with this method, it is possible to effectively improve the conductivity of the cobalt-free layered positive electrode material, thereby improving its rate capability, so that the cobalt-free layered positive electrode material has the advantages such as low cost, stable structure and excellent rate capability. A lithium-ion battery of the cobalt layered positive electrode material has good use performance and low cost.

In another aspect of the present disclosure, there is provided a cobalt-free layered positive electrode material. According to embodiments of the present disclosure, the cobalt-free layered positive electrode material includes: a layered lithium nickel manganese oxide matrix material, and a coating layer located on a surface of the layered lithium nickel manganese oxide matrix material. Further, the coating layer includes a first coating and a second coating agent. The first coating agent includes ceramic oxide, and the second coating agent includes at least one of phosphate and silicate. Therefore, the cobalt-free layered positive electrode material has the advantages such as low cost, stable structure and excellent rate capability, so that a lithium-ion battery using the cobalt-free layered positive electrode material has good use performance and low cost.

According to the embodiments of the present disclosure, the cobalt-free layered positive electrode material may be prepared by the method as described above. Therefore, the cobalt-free layered positive electrode material has the same features and advantages as the cobalt-free layered positive electrode material prepared by the method described above, and the detailed description thereof will be omitted herein.

According to the embodiments of the present disclosure, the ceramic oxide may include zirconium oxide, titanium oxide, aluminum oxide, or boron oxide. Therefore, electronic conductivity of the cobalt-free layered positive electrode material can be improved by the above ceramic oxide to improve the rate capability of the cobalt-free layered positive electrode material.

According to the embodiments of the present disclosure, the second coating agent may include at least one of lithium phosphate and lithium silicate. Therefore, ionic conductivity of the cobalt-free layered positive electrode material can be improved by the above coating agent to improve the rate capability of the cobalt-free layered positive electrode material.

According to the embodiments of the present disclosure, a mass ratio% of the ceramic oxide to the layered lithium nickel manganese oxide matrix material may range from 0.15% to 0.35%, and a mass ratio% of the second coating agent to the layered lithium nickel manganese oxide matrix material may range from 0.4% to 1.0%. As a result, the rate capability of the cobalt-free layered positive electrode material can be significantly improved. Meanwhile, the cobalt-free layered positive electrode material can obtain good cycle performance.

According to the embodiments of the present disclosure, a molar ratio of the first coating agent to the second coating agent ranges from 0.2 to 0.6. As a result, the conductivity of the cobalt-free layered positive electrode material can be significantly improved, thereby significantly improving the rate capability of the cobalt-free layered positive electrode material. In addition, it is possible to avoid impurity phases from being generated, thereby ensuring that the cobalt-free layered positive electrode material has a higher capacity.

The crystal type, specific surface area, median particle size and pH of the cobalt-free layered positive electrode material have been described in detail above, and therefore the detailed description thereof will be omitted herein.

In another aspect of the present disclosure, there is provided a lithium-ion battery. According to embodiments of the present disclosure, the lithium-ion battery includes: a positive electrode sheet including the cobalt-free layered positive electrode material as described above. Therefore, the lithium-ion battery has all of the features and advantages of the cobalt-free layered positive electrode material as described above, and thus the detailed description thereof will be omitted herein. In general, the lithium-ion battery has low cost, excellent rate capability, long service life, and high safety.

It should be understood by those skilled in the art that the lithium-ion battery also includes a negative electrode sheet, a separator, an electrolyte, and the like. The separator is located between the positive electrode sheet and the negative electrode sheet. Further, an accommodation space is formed between the positive electrode sheet and the negative electrode sheet, and the electrolyte solution is filled in the accommodation space as described above.

The solution of the present disclosure will be described below through specific examples. It should be noted that the following examples are only used to illustrate the present disclosure, rather than being regarded as restricting the scope of the present disclosure. Specific techniques or conditions that are not indicated in the examples should be performed based on techniques or conditions described in the related art or a product specification.

### Example 1

A preparation process of a cobalt-free layered positive electrode material is as follows.
(1) mixing LiOH with Ni_{0.75}Mn_{0.25}(OH)₂ uniformly in a high-speed mixing device to obtain a second mixed material. A rotation speed of the mixing is 850 rpm, a mixing duration is 10 min, and a material filling efficiency in the device is 55%.
(2) performing a second sintering treatment on the second mixed material in an atmosphere with a volume concentration of oxygen of 95% at a temperature of 930°C for a time of 10h at a heating rate of 4°C/min, performing a jet mill pulverization on the treated material through the second sintering treatment, and passing the pulverized material through a sieve of 325 meshes, to obtain a layered lithium nickel manganese oxide matrix material.
(3) mixing the layered lithium nickel manganese oxide matrix material with ZrO₂ and Li₃PO₄ together by a high-speed mixing device to obtain a first mixed material. A rotation speed of the mixing is 850 rpm, a mixing duration is 10 min, and a material filling efficiency in the device is 55%. Amass ratio% of ZrO₂ to the layered lithium nickel manganese oxide matrix material is 0.30%, and a mass ratio% of Li₃PO₄ to the layered lithium nickel manganese oxide matrix material is 0.5%. A particle size of each of ZrO₂ and Li₃PO₄ is 100 nm. A molar ratio of ZrO₂ to Li₃PO₄ is 0.56.
(4) performing a first sintering treatment on the first mixed material in an atmosphere with a volume concentration of oxygen of 40% at a temperature of 600°C for a time of 5 hours at a heating rate of 5°C/min, performing the jet mill pulverization on the treated material through the first sintering treatment, and passing the pulverized material through a sieve of 400 meshes to obtain the cobalt-free layered positive electrode material.

### Example 2

A preparation process of a cobalt-free layered positive electrode material in this example is substantially same as that in Example 1, the difference is that in step (3), the layered lithium nickel manganese oxide matrix material is mixed with TiO₂ and Li₄SiO₄ by a high-speed mixing device, a mass ratio% of TiO₂ to the layered lithium nickel manganese oxide matrix material is 0.15%, a mass ratio% of Li₄SiO₄ to the layered lithium nickel manganese oxide matrix material is 0.4%, a particle size of each of TiO₂ and Li₄SiO₄ is 80 nm, and a molar ratio of TiO₂ to Li₄SiO₄ is 0.56.

### Example 3

A preparation process of a cobalt-free layered positive electrode material in this example is substantially same as that in Example 1, the difference is that in step (3), a mass ratio% of ZrO₂ to the layered lithium nickel manganese oxide matrix material is 0.4%, a mass ratio% of Li₃PO₄ to the layered nickel manganese oxide matrix material is 0.5%, and the molar ratio of ZrO₂ to Li₃PO₄ is 0.75.

### Example 4

A preparation process of a cobalt-free layered positive electrode material in this example is basically the same as that in Example 1, the difference is that in step (3), a mass ratio% of ZrO₂ to the layered lithium nickel manganese oxide matrix material is 0.1%, a mass ratio% of Li₃PO₄ to the layered lithium nickel manganese oxide matrix material is 0.5%, and the molar ratio of ZrO₂ to Li₃PO₄ is 0.19.

### Comparative Example 1

A preparation process of a cobalt-free layered positive electrode material is as follows.
(1) mixing LiOH with Ni_{0.75}Mn_{0.25}(OH)₂ uniformly in a high-speed mixing device to obtain a second mixed material. A rotation speed of the mixing is 850 rpm, a mixing duration is 10 min, and a material filling efficiency in the device is 55%.
(2) performing a second sintering treatment on the second mixed material in an atmosphere with a volume concentration of oxygen of 95% at a temperature of 930°C for a time of 10h at a heating rate of 4°C/min, performing a jet mill pulverization on the treated material through the second sintering treatment, and passing the pulverized material through a sieve of 325 meshes to obtain a layered lithium nickel manganese oxide matrix material, that is, the resulted cobalt-free layered positive electrode material.

### Performance Testing

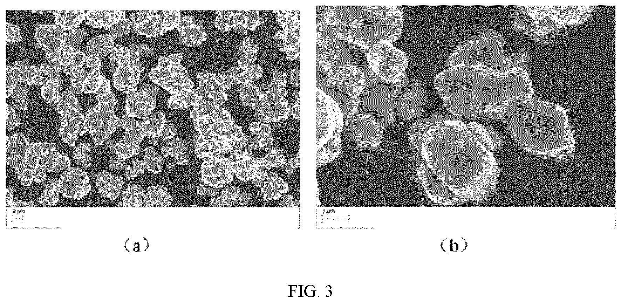

1. The cobalt-free layered positive electrode materials obtained in Example 1 and Comparative Example 1 were observed by using a scanning electron microscope. An electron microscope photo of the cobalt-free layered positive electrode material in Example 1 is shown in FIG. 2 (FIG. 2(a) shows a low magnification electron microscope image, and FIG. 2(b) shows a high magnification electron microscope image), and an electron microscope photo of the cobalt-free layered positive electrode material of Comparative Example 1 is shown in FIG. 3 (FIG. 3(a) shows a low magnification electron microscope image, and FIG. 3(b) shows a high magnification electron microscope image).
2. The cobalt-free layered positive electrode materials obtained in Examples 1 to 4 and Comparative Example 1 is mixed with a conductive agent SP (carbon black), and the binder PVDF (polyvinylidene fluoride) at a mass ratio of 92:4:4 to form a positive electrode slurry, which is coated on aluminum foil to form a positive electrode sheet, with a lithium-ion battery being assembled by a metal lithium as the negative electrode sheet, Celgard2400 microporous polypropylene film as a separator, LiPF₆(lithium hexafluorophosphate)/EC(ethylene carbonate)-DMC(dimethyl carbonate) ) as a electrolyte. Charge and discharge tests and rate capability tests were performed on the lithium-ion battery assembled in Examples 1 to 4 and Comparative Example 1, respectively. The results of the charge and discharge tests are shown in Table 1, and the result of the rate capability tests (discharge specific capacity (mAh/g) at different rates) are shown in Table 2. The charge-discharge test is to first test the capacity of the battery at a rate of 0.1C, and then continue to test the capacity of the battery at a rate of 1C.

**Table 1**

| | First charge specific capacity (0.1c, mAh/g) | First discharge specific capacity (0.1c, mAh/g) | First effect(%) | Discharge specific capacity (1c, mAh/g) | 50-cycle capacity retention (%) |
|---|---|---|---|---|---|
| Example 1 | 206.6 | 181.9 | 88.0 | 164.9 | 99.6 |
| Example 2 | 205.9 | 180.2 | 87.5 | 162.8 | 99.3 |
| Example 3 | 203.2 | 176.9 | 87.0 | 158.5 | 98.6 |
| Example 4 | 201.7 | 175.8 | 87.2 | 156.4 | 98.2 |
| Comparative Example 1 | 200.5 | 173.3 | 86.4 | 149.0 | 97.5 |

**Table 2**

| | 0.1C | 0.3C | 0.5C | 1C | 2C | 4C |
|---|---|---|---|---|---|---|
| Example 1 | 181.9 | 175.3 | 170.4 | 164.9 | 155.7 | 149.8 |
| Example 2 | 180.2 | 174.1 | 169.2 | 162.8 | 153.9 | 147.5 |
| Example 3 | 176.9 | 171.0 | 165.8 | 158.5 | 150.1 | 144.3 |
| Example 4 | 175.8 | 169.8 | 161.7 | 156.4 | 148.2 | 140.1 |
| Comparative Example 1 | 173.3 | 162.7 | 154.5 | 149.0 | 140.6 | 132.0 |

It can be seen from FIGS. 2 and 3 that the cobalt-free layered positive electrode material of Comparative Example 1 has a smooth surface, the cobalt-free layered positive electrode material of Example 1 has a uniform and compact coating layer formed on a surface thereof.

It can be seen from Table 1 that, compared with the cobalt-free layered positive electrode material without the coating layer (such as Comparative Example 1), the discharge specific capacity, the first efficiency, and the cycle performance of the cobalt-free layered positive electrode material with the coating layer (such as Examples 1 to 4) are significantly improved.

It can be seen from Table 2 that, compared with the cobalt-free layered positive electrode material without the coating layer (such as Comparative Example 1), the rate capability of the cobalt-free layered positive electrode material with the coating layer (such as Examples 1 to 4) is improved, especially at high rate, the rate capability improvement is more significant.

Comparing Example 3 and Example 4 with Example 1, it can be seen that when the content of ZrO₂ is too high or too low, the rate capability of the lithium-ion battery will be reduced.

In the description of this specification, description with reference to the terms "an embodiment," "another embodiment," etc. means that specific features, structures, materials or characteristics described in connection with the embodiment or example are included in at least one embodiment or example of the present disclosure. In this specification, the schematic representations of the above terms do not necessarily refer to the same embodiment or example. In addition, the described specific features, structures, materials or characteristics may be combined in any one or more embodiments or examples in a suitable manner. In addition, those skilled in the art can combine the different embodiments or examples and the features of the different embodiments or examples described in this specification without contradicting each other. In addition, it should be noted that in this specification, the terms "first" and "second" are only used for descriptive purposes, and cannot be understood as indicating or implying relative importance or implicitly indicating the number of indicated technical features.

Although the embodiments of the present disclosure have been illustrated and described above, it should be understood that the embodiments as described above are exemplary and should not be construed as limiting the present disclosure. Changes, modifications, substitutions and modifications may be made to the above embodiments by those of ordinary skill in the art within the scope of the present disclosure.

## Claims

1. A method for preparing a cobalt-free layered positive electrode material, the method comprising:
preparing a layered lithium nickel manganese oxide matrix material;
mixing the layered lithium nickel manganese oxide matrix material with a coating agent to obtain a first mixed material; and
forming, by performing a first sintering treatment on the first mixed material, a coating layer on a surface of the layered lithium nickel manganese oxide matrix material to obtain the cobalt-free layered positive electrode material,
wherein the coating agent comprises:
a first coating agent comprising ceramic oxide; and
a second coating agent comprising at least one of phosphate and silicate.

2. The method according to claim 1, wherein the ceramic oxide comprises at least one of zirconium oxide, titanium oxide, aluminum oxide, or boron oxide.

3. The method according to claim 1 or 2, wherein the second coating agent comprises at least one of lithium phosphate and lithium silicate.

4. The method according to any one of claims 1 to 3, wherein:
a mass ratio% of the ceramic oxide to the layered lithium nickel manganese oxide matrix material ranges from 0.15% to 0.35%; and
a mass ratio% of the second coating agent to the layered lithium nickel manganese oxide matrix material ranges from 0.4% to 1.0%.

5. The method according to claim 4, wherein a molar ratio of the first coating agent to the second coating agent ranges from 0.2 to 0.6.

6. The method according to any one of claims 1 to 5, wherein the first coating agent and the second coating agent have each independently a particle size ranging from 50 nm to 300 nm.

7. The method according to any one of claims 1 to 5, wherein the first coating agent and the second coating agent have each independently a particle size ranging from 50 nm to 100 nm.

8. The method according to claim 1, wherein said preparing the layered lithium nickel manganese oxide matrix material comprises:
mixing a lithium source powder with nickel-manganese hydroxide to obtain a second mixed material; and
performing a second sintering treatment on the second mixed material to obtain the layered lithium nickel manganese oxide matrix material.

9. The method according to claim 8, wherein the lithium source powder is mixed with the nickel-manganese hydroxide at a rotation speed ranging from 800 rpm to 900 rpm for a mixing duration ranging from 10 min to 20 min.

10. The method according to claim 8, wherein the second sintering treatment is performed in an atmosphere with a volume concentration of oxygen greater than 90%; a temperature of the second sintering treatment ranges from 800°C to 970°C; a duration of the second sintering treatment ranges from 8h to 12h; and a heating rate of the second sintering treatment ranges from 1°C/min to 5°C/min.

11. The method according to claim 8, wherein the lithium source powder comprises at least one of lithium hydroxide and lithium carbonate.

12. The method according to claim 8, wherein a molecular formula of the nickel-manganese hydroxide is NiₓMn_{y}(OH)₂, where 0.55≤x≤0.95, and 0.05≤y≤0.45.

13. The method according to claim 1, wherein the layered lithium nickel manganese oxide matrix material is mixed with the coating agent at a rotation speed ranging from 800 rpm to 900 rpm for a mixing duration ranging from 10 min to 20 min.

14. The method according to claim 1, wherein the first sintering treatment is performed in an atmosphere with a volume concentration of oxygen from 20% to 100%; a temperature of the first sintering treatment ranges from 300°C to 700°C; a duration of the first sintering treatment ranges from 4h to 10h; and a heating rate of the first sintering treatment ranges from 3°C/min to 5°C/min.

15. The method according to any one of claims 1 to 14, wherein the obtained cobalt-free layered positive electrode material is a monocrystalline positive electrode material or a polycrystalline positive electrode material.

16. The method according to any one of claims 1 to 14, wherein the obtained cobalt-free layered positive electrode material has a specific surface area ranging from 0.1 m²/g to 0.7 m²/g.

17. The method according to any one of claims 1 to 14, wherein the obtained cobalt-free layered positive electrode material has a median particle size ranging from 3 µm to 15 µm.

18. The method according to any one of claims 1 to 14, wherein the obtained cobalt-free layered positive electrode material has a pH smaller than or equal to 12.

19. A cobalt-free layered positive electrode material, comprising:
a layered lithium nickel manganese oxide matrix material; and
a coating layer located on a surface of the layered lithium nickel manganese oxide matrix material, the coating layer comprising:
a first coating agent comprising ceramic oxide; and
a second coating agent comprising at least one of phosphate and silicate.

20. The cobalt-free layered positive electrode material according to claim 19, wherein the ceramic oxide comprises at least one of zirconium oxide, titanium oxide, aluminum oxide, or boron oxide.

21. The cobalt-free layered positive electrode material according to claim 19 or 20, wherein the second coating agent comprises at least one of lithium phosphate and lithium silicate.

22. The cobalt-free layered positive electrode material according to any one of claims 19 to 21, wherein:
a mass ratio% of the ceramic oxide to the layered lithium nickel manganese oxide matrix material ranges from 0.15% to 0.35%; and
a mass ratio% of the second coating agent to the layered lithium nickel manganese oxide matrix material ranges from 0.4% to 1.0%.

23. The cobalt-free layered positive electrode material according to any one of claims 20 to 22, wherein a molar ratio of the first coating agent to the second coating agent ranges from 0.2 to 0.6.

24. The cobalt-free layered positive electrode material according to any one of claims 19 to 23, wherein the cobalt-free layered positive electrode material is a monocrystalline positive electrode material or a polycrystalline positive electrode material.

25. The cobalt-free layered positive electrode material according to any one of claims 19 to 24, wherein the cobalt-free layered positive electrode material has a specific surface area ranging from 0.1 m²/g to 0.7 m²/g.

26. The cobalt-free layered positive electrode material according to any one of claims 19 to 25, wherein the cobalt-free layered positive electrode material has a median particle size ranging from 3 µm to 15 µm.

27. The cobalt-free layered positive electrode material according to any one of claims 19 to 26, wherein the cobalt-free layered positive electrode material has a pH smaller than or equal to 12.

28. A lithium-ion battery, comprising:
a positive electrode sheet comprising the cobalt-free layered positive electrode material according to any one of claims 19 to 27.
